(19) **Europäisches Patentamt / European Patent Office / Office européen des brevets**

(11) **EP 4 752 759 A1**

(12) **EUROPEAN PATENT APPLICATION**
published in accordance with Art. 153(4) EPC

(43) Date of publication:
**03.06.2026 Bulletin 2026/23**

(21) Application number: **24853517.1**

(22) Date of filing: **23.07.2024**

(51) International Patent Classification (IPC):
***G06F 18/241*** (2023.01)

(52) Cooperative Patent Classification (CPC):
**G06F 18/213; G06F 18/241; G06Q 10/0635; G06Q 10/0639**

(86) International application number:
**PCT/CN2024/106991**

(87) International publication number:
**WO 2025/036105 (20.02.2025 Gazette 2025/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.08.2023 CN 202311035386**

(71) Applicant: **Yinwang Intelligent Technologies Co., Ltd.**
**Shenzhen, Guangdong 518129 (CN)**

(72) Inventors:
• **LIU, Jianqin**
  **Shenzhen, Guangdong 518129 (CN)**
• **WU, Yong**
  **Shenzhen, Guangdong 518129 (CN)**
• **HE, Yue**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **SCENE PRIORITY DETERMINATION METHOD AND APPARATUS**

(57)     A scenario priority determining method and apparatus are provided. The method includes: obtaining preset priorities of a plurality of scenario features (S201); obtaining evaluation information of a driving scenario, where the evaluation information of the driving scenario is used to describe priorities of the plurality of scenario features in the driving scenario (S202); and determining priorities of a plurality of driving scenarios based on the preset priorities of the plurality of scenario features and a plurality of pieces of evaluation information of the plurality of driving scenarios (S203). In this way, accuracy of an evaluated priority of the driving scenario can be improved.

```
┌─────────────────────────────────────────────────────────────┐
│ S201: Obtain preset priorities of a plurality of scenario    │
│       features                                                │
└─────────────────────────────────────────────────────────────┘
                              │
                              ▼
┌─────────────────────────────────────────────────────────────┐
│ S202: Obtain evaluation information of a driving scenario,    │
│ where the evaluation information of the driving scenario is   │
│ used to describe priorities of the plurality of scenario      │
│ features in the driving scenario                              │
└─────────────────────────────────────────────────────────────┘
                              │
                              ▼
┌─────────────────────────────────────────────────────────────┐
│ S203: Determine priorities of M driving scenarios based on    │
│ the preset priorities of the plurality of scenario features   │
│ and M pieces of evaluation information of the M driving        │
│ scenarios, where M is an integer greater than 1               │
└─────────────────────────────────────────────────────────────┘
```

FIG. 2

EP 4 752 759 A1

## Description

This application claims priority to Chinese Patent Application No. 202311035386.5, filed with the China National Intellectual Property Administration on August 15, 2023 and entitled "SCENARIO PRIORITY DETERMINING METHOD AND APPARATUS", which is incorporated herein by reference in its entirety.

## TECHNICAL FIELD

This application relates to the field of intelligent driving, and in particular, to a scenario priority determining method and apparatus.

## BACKGROUND

A scenario priority is critical to testing of a driving scenario. For example, an accurately evaluated scenario priority can improve test efficiency of the driving scenario while reducing test resources and test costs. Currently, the priority of the driving scenario is determined by only a product of a plurality of quantifiable indicators. Accuracy of the priority that is of the test scenario and that is evaluated in this manner is not high.

## SUMMARY

This application discloses a scenario priority determining method and apparatus, to improve accuracy of an evaluated priority of a driving scenario.

According to a first aspect, this application provides a scenario priority determining method. The method includes: obtaining evaluation information of a driving scenario, where the evaluation information of the driving scenario is used to describe priorities of a plurality of scenario features in the driving scenario; and determining priorities of M driving scenarios based on preset priorities of the plurality of scenario features and M pieces of evaluation information of the M driving scenarios, where M is an integer greater than 1.

For example, the scenario feature may also be referred to as a scenario evaluation criterion, a scenario assessment criterion, or a scenario assessment parameter.

Herein, the priority of the scenario feature in the driving scenario indicates an importance degree of a classification type to which the scenario feature belongs in the driving scenario. It may be understood that, for a same scenario feature, priorities of the scenario feature in different driving scenarios may be different. In addition, different scenario features have different classification types. The classification type of the scenario feature makes the scenario feature more finely describe the driving scenario.

Herein, the preset priority of the scenario feature indicates an importance degree of the scenario feature in the plurality of scenario features. The preset priority of the scenario feature is irrelevant to the driving scenario. In other words, the preset priority of the scenario feature remains unchanged in different driving scenarios. The preset priorities of the scenario features may be used to learn of ranking of importance of the plurality of scenario features.

Herein, the driving scenario is, for example, understood as an environment in which a vehicle is located, including one or more of information such as a road type, a weather condition, a traffic condition, and a driving task. A typical driving scenario may be, for example, a vehicle cut-in scenario, a vehicle cut-out scenario, a vehicle-following scenario, or a preceding vehicle braking scenario.

Herein, the M pieces of evaluation information of the M driving scenarios mean that each driving scenario corresponds to one piece of evaluation information. Therefore, the M driving scenarios have a total of M pieces of evaluation information.

In the foregoing method, the preset priorities of the plurality of scenario features indicate ranking of the importance of the plurality of scenario features. Priorities of the plurality of scenario features in different driving scenarios may be used to more finely describe the different driving scenarios. In this way, priorities of a plurality of driving scenarios are comprehensively determined from two dimensions: the preset priorities of the scenario features and priorities of the scenario features in the driving scenarios. This can improve accuracy of evaluating the priority of the driving scenario.

For example, in the evaluation information of the driving scenario, the priorities of the plurality of scenario features in the driving scenario are arranged based on a value relationship between the preset priorities of the plurality of scenario features. In this way, the evaluation information of the driving scenario not only describes the priorities of the plurality of scenario features in the driving scenario, but also may indicate the value relationship between the preset priorities of the plurality of scenario features by specifying an arrangement order of the priorities of the plurality of scenario features in the driving scenario. This helps improve efficiency of evaluating the priority of the driving scenario.

Optionally, the method further includes: selecting, based on the priorities of the M driving scenarios, N driving scenarios from the M driving scenarios for testing, where N is a positive integer less than M.

In the foregoing implementation, a part of driving scenarios are selected from a large quantity of driving scenarios based on priorities of the driving scenarios for testing. This can improve testing effect of the driving scenario. Further, the priority of the driving scenario may affect a test sequence. A driving scenario with a higher priority may be tested first. This helps reduce test resources and test costs.

Optionally, the method further includes: adjusting the preset priorities of the plurality of scenario features based on a test result of the N driving scenarios when the test result of the N driving scenarios does not meet a test objective.

For example, adjusting the preset priorities of the plurality of scenario features based on the test result may be: adjusting preset priorities of a part or all of the plurality of scenario features based on the test result.

For example, the test objective is related to a quantity of scenario features that participate in scenario priority evaluation. The test objective includes a test sub-objective corresponding to each of the plurality of scenario features.

For example, the plurality of scenario features include a scenario feature 1, a scenario feature 2, and a scenario feature 3. The preset priorities of the plurality of scenario features are sorted in descending order as follows: the scenario feature 1 > the scenario feature 2 > the scenario feature 3. An example in which the test result of the N driving scenarios does not meet a test sub-objective corresponding to the scenario feature 3 in the test objective is used. In this case, adjusting the preset priorities of the plurality of scenario features based on the test result may be increasing a preset priority of the scenario feature 3 in the plurality of scenario features based on the test result.

In the foregoing implementation, the preset priorities of the plurality of scenario features that participate in scenario priority evaluation are adjusted based on test result feedback, to change ranking of importance of at least two scenario features. In this way, the test result of the driving scenario can better meet the test objective.

Optionally, the plurality of scenario features include a plurality of pieces of the following: scenario complexity, scenario criticality, scenario exposure, scenario reasonableness, and scenario accuracy.

For example, the scenario criticality describes a possible impact on safety of a traffic participant and a passenger of an autonomous driving system; the scenario exposure is used to describe incidence or an occurrence frequency of the driving scenario; the scenario complexity is used to describe a difficulty degree caused by scenario attributes (for example, behavior of a participating road user, defined road infrastructure, and an environmental condition) that may affect a driving task of the autonomous driving system; the scenario reasonableness is used to describe a degree of conformity between scenario parameter data of a driving scenario used in simulation testing and a real physical world; and the scenario accuracy is used to describe a fitting degree or a similarity between a scenario extracted based on driving data and an actual scenario.

Optionally, the preset priorities of the plurality of scenario features are set based on confidence of the plurality of scenario features or historical test experience.

For example, higher confidence of the scenario feature indicates that a preset priority of the scenario feature may be set to be higher. In addition, the historical test experience may indicate a setting of a preset priority of each scenario feature corresponding to a small quantity of test results. In another implementation, the preset priorities of the plurality of scenario features may alternatively be set based on a plurality of items of the confidence of the scenario features, the historical test experience (or prior experience), and the user intention. This is not specifically limited herein.

In the foregoing implementation, a dimension, namely, the preset priority of the scenario feature, is considered when the priority of the driving scenario is evaluated. This helps improve accuracy of evaluating the scenario priority.

Optionally, the plurality of scenario features include a first feature and a second feature, where a preset priority of the first feature is higher than a preset priority of the second feature; and the M driving scenarios include a first driving scenario and a second driving scenario, and a priority of the first driving scenario and a priority of the second driving scenario meet any one of the following cases:

if a priority of the first feature in the first driving scenario is higher than a priority of the first feature in the second driving scenario, the priority of the first driving scenario is higher than the priority of the second driving scenario; or

if a priority of the first feature in the first driving scenario is the same as a priority of the first feature in the second driving scenario and a priority of the second feature in the first driving scenario is higher than a priority of the second feature in the second driving scenario, the priority of the first driving scenario is higher than the priority of the second driving scenario; or

if a priority of the first feature in the first driving scenario is the same as a priority of the first feature in the second driving scenario and a priority of the second feature in the first driving scenario is the same as a priority of the second feature in the second driving scenario, the priority of the first driving scenario is the same as the priority of the second driving scenario.

In other words, priorities of the driving scenarios may be determined in descending order of the preset priorities of the scenario features. It is assumed that a preset priority of the scenario feature 1 is the highest, a preset priority of the scenario feature 2 is the second highest, the preset priority of the scenario feature 3 is the lowest, a total quantity of driving scenarios is M, and M is an integer greater than 1. In this case, priorities of the scenario feature 1 in the M driving scenarios are first sequentially compared, and a higher priority of the scenario feature 1 in the driving scenario indicates a higher priority of the driving scenario. If priorities of the scenario feature 1 in P driving scenarios in the M driving scenarios are the same, where P is a positive integer less than M, priorities of the scenario feature 2 in the P driving scenarios are then sequentially compared, and a higher priority of the scenario feature 2 in the driving scenario indicates a higher priority of the driving scenario. If priorities of the scenario feature 2 in L driving scenarios in the P driving scenarios are the same, where L is a positive integer less than P, priorities of the scenario feature 3 in the L driving scenarios are then sequentially compared, and a higher priority of the scenario feature 3 in the driving scenario indicates a higher priority of the driving scenario.

In the foregoing implementation, values of the priorities of the corresponding scenario features in the driving scenarios are sequentially compared in descending order of the preset priorities of the scenario features, to determine the priorities of the driving scenarios. This improves accuracy of the evaluated priority of the driving scenario.

Optionally, a total quantity of the plurality of scenario features is S, a preset priority of an $i^{th}$ scenario feature is greater than a preset priority of an $(i+1)^{th}$ scenario feature, and i is an integer greater than or equal to 1 and less than S. Determining the priorities of the M driving scenarios based on the preset priorities of the plurality of scenario features and the M pieces of evaluation information of the M driving scenarios includes: collecting statistics on the preset priorities of the plurality of scenario features and the M pieces of evaluation information by using a ranking function, to determine the priorities of the M driving scenarios, where the ranking function is a sum of S parts, an $i^{th}$ part is represented by an $i^{th}$ coefficient and a priority of the $i^{th}$ scenario feature in the driving scenario, and a value of each coefficient in the ranking function meets the following constraint condition: a minimum value of the $i^{th}$ part is greater than a maximum value of a sum of an $(i+1)^{th}$ part, an $(i+2)^{th}$ part, ..., and an $S^{th}$ part in the S parts.

In an implementation, that the $i^{th}$ part is represented by the $i^{th}$ coefficient and the priority of the $i^{th}$ scenario feature in the driving scenario means that the $i^{th}$ part is a product of the $i^{th}$ coefficient and the priority of the $i^{th}$ scenario feature in the driving scenario.

In another implementation, that the $i^{th}$ part is represented by the $i^{th}$ coefficient and the priority of the $i^{th}$ scenario feature in the driving scenario means that the $i^{th}$ part is represented as a function using the $i^{th}$ coefficient as a base and using the priority of the $i^{th}$ scenario feature in the driving scenario as an exponent.

It may be understood that the evaluation information of the driving scenario may be substituted into the ranking function to obtain a ranking function value corresponding to the driving scenario. A larger ranking function value corresponding to the driving scenario indicates a higher priority of the driving scenario.

In the foregoing implementation, a ranking function value corresponding to each driving scenario can be quickly calculated by defining the ranking function, and the ranking function values corresponding to the driving scenarios are compared, to determine the priorities of the driving scenarios. This not only improves accuracy of evaluating the scenario priority, but also improves efficiency of evaluating the scenario priority.

Optionally, the preset priorities of the plurality of scenario features are input by a user.

In the foregoing implementation, a manual interaction interface may be further provided for the user, so that the user can separately set the preset priorities for the plurality of scenario features through the manual interaction interface.

According to a second aspect, this application provides a scenario priority determining apparatus. The apparatus includes: an obtaining unit, configured to obtain evaluation information of a driving scenario, where the evaluation information of the driving scenario is used to describe priorities of a plurality of scenario features in the driving scenario; and a processing unit, configured to determine priorities of M driving scenarios based on preset priorities of the plurality of scenario features and M pieces of evaluation information of the M driving scenarios, where M is an integer greater than 1.

Optionally, in the evaluation information of the driving scenario, the priorities of the plurality of scenario features in the driving scenario are arranged based on a value relationship between the preset priorities of the plurality of scenario features.

Optionally, the apparatus further includes a test unit; and the test unit is configured to select, based on the priorities of the M driving scenarios, N driving scenarios from the M driving scenarios for testing, where N is a positive integer less than M.

Optionally, the test unit is further configured to: adjust the preset priorities of the plurality of scenario features based on a test result of the N driving scenarios when the test result of the N driving scenarios does not meet a test objective.

Optionally, the plurality of scenario features include a plurality of pieces of the following: scenario complexity, scenario criticality, scenario exposure, scenario reasonableness, and scenario accuracy.

Optionally, the preset priorities of the plurality of scenario features are set based on confidence of the plurality of scenario features or historical test experience.

Optionally, the plurality of scenario features include a first feature and a second feature, where a preset priority of the first feature is higher than a preset priority of the second feature; and the M driving scenarios include a first driving scenario and a second driving scenario, and a priority of the first driving scenario and a priority of the second driving scenario meet any one of the following cases:

if a priority of the first feature in the first driving scenario is higher than a priority of the first feature in the second driving scenario, the priority of the first driving scenario is higher than the priority of the second driving scenario; or

if a priority of the first feature in the first driving scenario is the same as a priority of the first feature in the second driving scenario and a priority of the second feature in the first driving scenario is higher than a priority of the second feature in the second driving scenario, the priority of the first driving scenario is higher than the priority of the second driving scenario; or

if a priority of the first feature in the first driving scenario is the same as a priority of the first feature in the second driving scenario and a priority of the second feature in the first driving scenario is the same as a priority of the second feature in the second driving scenario, the priority of the first driving scenario is the same as the priority of the second driving scenario.

Optionally, a total quantity of the plurality of scenario features is S, a preset priority of an $i^{th}$ scenario feature is greater than a preset priority of an $(i+1)^{th}$ scenario feature, and i is an integer greater than or equal to 1 and less than S; and the processing unit is specifically configured to collect statistics on the preset priorities of the plurality of scenario features and the M pieces of evaluation information by using a ranking function, to determine the priorities of the M driving scenarios, where the ranking function is a sum of S parts, an $i^{th}$ part is represented by an $i^{th}$ coefficient and a priority of the $i^{th}$ scenario feature in the driving scenario, and a value of each coefficient in the ranking function meets the following constraint condition: a minimum value of the $i^{th}$ part is greater than a maximum value of a sum of an $(i+1)^{th}$ part, an $(i+2)^{th}$ part, ..., and an $S^{th}$ part in the S parts.

Optionally, the preset priorities of the plurality of scenario features are input by a user.

According to a third aspect, this application provides a scenario priority determining apparatus. The apparatus includes a processor and a memory. The memory is configured to store program instructions; and the processor invokes the program instructions in the memory, so that the apparatus performs the method in any one of the first aspect or the possible implementations of the first aspect.

According to a fourth aspect, this application provides a computer-readable storage medium, including computer instructions. When the computer instructions are run by a processor, the method in any one of the first aspect or the possible implementations of the first aspect is implemented.

According to a fifth aspect, this application provides a computer program product. When the computer program product is executed by a processor, the method in any one of the first aspect or the possible embodiments of the first aspect is implemented. For example, the computer program product may be a software installation package. When the method provided in any possible design of the first aspect needs to be used, the computer program product may be downloaded and executed on the processor, to implement the method in any one of the first aspect or the possible embodiments of the first aspect.

For beneficial effect of the second aspect to the fifth aspect, refer to the descriptions of the first aspect. Details are not described herein again.

## BRIEF DESCRIPTION OF DRAWINGS

FIG. 1 is a diagram of an architecture of a priority determining apparatus according to an embodiment of this application;

FIG. 2 is a flowchart of a scenario priority determining method according to an embodiment of this application;

FIG. 3 is a diagram of a manual interaction interface according to an embodiment of this application;

FIG. 4 is a diagram of a process of determining priorities of a plurality of driving scenarios according to an embodiment of this application;

FIG. 5 is a diagram of another process of determining priorities of a plurality of driving scenarios according to an embodiment of this application;

FIG. 6 is a flowchart of another scenario priority determining method according to an embodiment of this application; and

FIG. 7 is a diagram of a structure of a computing device according to an embodiment of this application.

## DESCRIPTION OF EMBODIMENTS

It should be noted that prefix words such as "first" and "second" are used in this application only to distinguish between different described objects, and do not constitute any limitation on locations, a sequence, priorities, quantities, content, or the like of the described objects. For example, if the described objects are "fields", ordinal numbers before "field" in a "first field" and a "second field" do not limit locations or a sequence of the "fields", and "first" and "second" do not limit whether the "field" modified by "first" and the "field" modified by "second" are in a same message, and do not limit a sequence of the "first field" and the "second field". For another example, if the described objects are "levels", ordinal numbers before "level" in a "first level" and a "second level" do not limit priorities of the "levels". For another example, a quantity of described objects is not limited by a prefix word, and may be one or more. A "first device" is used as an example, where a quantity of "devices" may be one or more. In addition, objects modified by different prefix words may be the same or different. For example, if a described object is a "device", a "first device" and a "second device" may be a same device, devices of a same type, or devices of different types. For another example, if a described object is "information", "first information" and "second information" may be information of same content or information of different content. In conclusion, use of the prefix words for distinguishing between the described objects in embodiments of this application does not constitute a limitation on the described objects. For descriptions of the described objects, refer to the context descriptions in the claims or embodiments, and use of the prefix words should not constitute a redundant limitation.

It should be noted that, in embodiments of this application, a description manner like "at least one (or at least one piece) of a1, a2, ..., and an" is used, including a case in which any one of a1, a2, ..., and an exists alone, and also including a case of any combination of any plurality of a1, a2, ..., and an. Each case may exist alone. For example, a description manner of "at least one of a, b, and c" includes a case of a single a, a single b, a single c, a combination of a and b, a combination of a and c, a combination of b and c, or a combination of a, b, and c.

The following describes technical solutions of this application with reference to accompanying drawings.

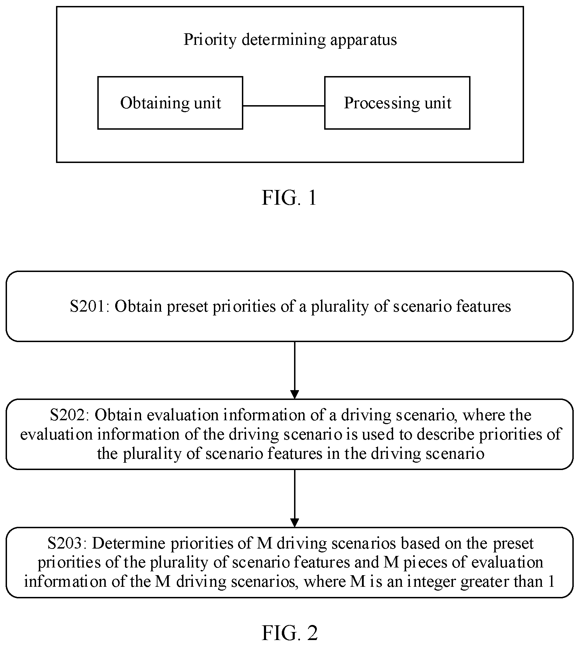

FIG. 1 is a diagram of a structure of a priority determining apparatus according to an embodiment of this application. The priority determining apparatus is configured to determine a priority of a driving scenario. As shown in FIG. 1, the priority determining apparatus includes an obtaining unit and an output unit. The obtaining unit and the output unit may communicate with each other in a wireless or wired manner. The priority determining apparatus may be implemented by using hardware, software, or a combination of software and hardware.

For example, the obtaining unit is configured to obtain evaluation information of the driving scenario, where the evaluation information of the driving scenario is used to describe priorities of a plurality of scenario features in the driving scenario; and the processing unit is configured to determine priorities of M driving scenarios based on preset priorities of the plurality of scenario features and M pieces of evaluation information of the M driving scenarios, where M is an integer greater than 1.

Herein, the driving scenario may be, for example, understood as an environment in which a vehicle is located, including one or more of information such as a road type, a weather condition, a traffic condition, and a driving task. A typical driving scenario may be, for example, a vehicle cut-in scenario, a vehicle cut-out scenario, a vehicle-following scenario, or a preceding vehicle braking scenario.

Herein, the scenario feature may also be referred to as a scenario evaluation criterion, a scenario assessment criterion, or a scenario assessment parameter.

Herein, the priority of the scenario feature in the driving scenario may also be referred to as a sub-priority of the scenario feature. For ease of description, the sub-priority of the scenario feature below indicates the priority of the scenario feature in the driving scenario.

It can be learned that the sub-priority of the scenario feature is related to the driving scenario. For a same scenario feature, priorities of the scenario feature in different driving scenarios may be different. The preset priority of the scenario feature is irrelevant to the driving scenario. A same scenario feature in different driving scenarios has a same preset priority. For the sub-priority of the scenario feature and the preset priority of the scenario feature, refer to related descriptions in the following embodiments. For brevity of the specification. Details are not described herein.

For example, the priority determining apparatus may be a network side device. For example, the network side device may be a server (for example, a scenario priority evaluation server or a simulation test server) deployed on a network side, or a component or a chip in the server, or a system-level device including a plurality of servers. The network side device may be deployed in a cloud environment or an edge environment. This is not specifically limited herein.

For example, a scenario priority determining method provided in embodiments of this application may be applied to not only an autonomous driving simulation system, but also another simulation test system that requires a scenario priority, for example, a model-in-the-loop test system or a hardware-in-the-loop test system.

Herein, "autonomous driving" is not limited to a fully autonomous driving system, a highly autonomous driving system, a conditionally autonomous driving system, a partially autonomous driving system, and the like. A person skilled in the art may understand that non-fully manual driving systems providing intelligent driving can all be covered under this concept for simulation processing.

It should be noted that FIG. 1 is merely an example diagram of an architecture of the priority determining apparatus, but the priority determining apparatus is not limited to the form shown in FIG. 1. The diagram of the structure of the priority determining apparatus may further include more or fewer units than those shown in FIG. 1. In addition, the method provided in embodiments of this application may be applied to the priority determining apparatus shown in FIG. 1. Certainly, the method provided in embodiments of this application is alternatively applicable to another priority determining apparatus. This is not limited in embodiments of this application.

Before the scenario priority determining method provided in embodiments of this application is described, the plurality of scenario features used for scenario priority evaluation need to be first determined.

In an implementation, the plurality of scenario features that participate in scenario priority evaluation may be obtained from scenario features defined in an industry standard and/or scenario features defined based on expert experience. For example, the plurality of scenario features that participate in scenario priority evaluation may be obtained by screening, based on confidence of the scenario features, the scenario features defined in the industry standard and/or the scenario features defined based on the expert experience, or may be customized by a tester. It may be understood that the plurality of scenario features are preset.

For example, the scenario features defined in the industry standard include scenario criticality, scenario exposure, and scenario complexity. The scenario criticality (scenario criticality) describes a possible impact on safety of a traffic participant and a passenger of an autonomous driving system; the scenario exposure (scenario exposure) is used to describe incidence or an occurrence frequency of the driving scenario; and the scenario complexity (scenario complexity) is used to describe a difficulty degree caused by scenario attributes (for example, behavior of a participating road user, defined road infrastructure, and an environmental condition) that may affect a driving task of the autonomous driving system.

For example, for simulation testing, the scenario features defined based on the expert experience further include scenario reasonableness and scenario accuracy. The scenario reasonableness is used to describe a degree of conformity between scenario parameter data of a driving scenario used in simulation testing and a real physical world; and the scenario accuracy is used to describe a fitting degree or a similarity between a scenario extracted based on driving data and an actual scenario.

Herein, a quantity of the plurality of scenario features that participate in scenario priority evaluation is not limited. For example, the quantity may be 2, 3, 4, or more.

The following describes two priorities of the scenario feature defined in embodiments of this application: the preset priority of the scenario feature and the sub-priority of the scenario feature.

(1) Preset priority of the scenario feature

For example, the preset priority of the scenario feature may also be referred to as a block priority of the scenario feature.

The preset priority of the scenario feature indicates an importance degree of the scenario feature in the plurality of scenario features, and a higher importance degree of the scenario feature in the plurality of scenario features indicates a higher preset priority of the scenario feature.

For example, the plurality of scenario features include a scenario feature 1, a scenario feature 2, and a scenario feature 3. It is assumed that a preset priority of the scenario feature 1 is higher than a preset priority of the scenario feature 2, and the preset priority of the scenario feature 2 is higher than a preset priority of the scenario feature 3. In this case, it means that importance degrees of the three scenario features in descending order are as follows: the scenario feature 1 > the scenario feature 2 > the scenario feature 3. It can be learned that the preset priorities may be used to learn of ranking of importance of the plurality of scenario features that participate in scenario priority evaluation. In other words, the preset priorities are used to consider impact of each scenario feature on scenario evaluation from a scenario feature dimension. This helps improve accuracy of evaluating the scenario priority.

In an implementation, the preset priorities of the plurality of scenario features are set based on the confidence of the scenario features or historical test experience, or may be defined by a user based on a test objective or an intention of the user. This is not specifically limited herein.

An example in which the plurality of scenario features include the scenario complexity, the scenario criticality, and the scenario exposure is used. For example, when it is determined, based on the historical test experience or prior experience, that safety is preferentially considered and then test complexity is considered, a preset priority of the scenario criticality may be set to be higher than a preset priority of the scenario complexity, and the preset priority of the scenario complexity is greater than a preset priority of the scenario exposure. For example, the preset priorities of the plurality of scenario features may alternatively be set based on the user intention in descending order as follows: the scenario criticality > the scenario exposure > the scenario complexity. For example, the preset priorities of the plurality of scenario features may alternatively be set according to a principle that higher confidence of the scenario feature indicates a higher preset priority of the scenario feature. In some possible embodiments, for example, the preset priorities of the plurality of scenario features may be determined based on a plurality of items such as the confidence of the scenario features, the user intention, and the historical test experience.

(2) Sub-priority of the scenario feature

The sub-priority of the scenario feature is the priority of the scenario feature in the driving scenario.

Herein, the sub-priority of the scenario feature indicates an importance degree of a classification type to which the scenario feature belongs in the driving scenario. For any driving scenario, a higher importance degree of a classification type to which the scenario feature belongs in the driving scenario indicates a higher sub-priority of the scenario feature. It may be understood that if a same scenario feature belongs to different classification types in different driving scenarios, it also indicates that sub-priorities of the scenario feature in the different driving scenarios are also different.

For example, the classification type of the scenario feature may be indicated by using a value, or may be indicated by using a character.

An example in which the classification type is represented by the value is used. The scenario feature is the scenario criticality. It is assumed that the scenario criticality has three classification types: basically non-critical, slightly critical, and highly critical. It is assumed that a higher importance degree of a classification type to which the scenario criticality belongs in the driving scenario indicates a larger value of a sub-priority of the scenario criticality. When the classification type of the scenario feature is basically non-critical, a value of the sub-priority of the scenario criticality is 1; when the classification type of the scenario feature is slightly critical, a value of the sub-priority of the scenario criticality is 2; or when the classification type of the scenario feature is highly critical, a value of the sub-priority of the scenario criticality is 3. It can be learned that sub-priorities may be used to further divide an importance or impact degree of a same scenario feature, and an importance or impact degree of the scenario feature in evaluation of different driving scenarios may be more finely described.

It may be understood that classification into the three classification types (that is, non-critical, slightly critical, and highly critical) of the scenario feature of the scenario criticality is merely an example. In some possible embodiments, the scenario criticality may alternatively have four classification types: non-critical, slightly critical, moderately critical, and highly critical. In addition, different scenario features may alternatively have different quantities of classification types, and the quantities of classification types of the scenario features are not limited to being necessarily equal or unequal.

For example, classification into the classification types of the scenario feature may depend on expert experience, or may be based on measured data (for example, motion track data or traffic accident data), or classification into the scenario feature may be performed according to a quantitative method. This is not specifically limited herein.

FIG. 2 is a flowchart of a scenario priority determining method according to an embodiment of this application. The method may be applied to the processing apparatus shown in FIG. 1. The method includes but is not limited to the following steps.

S201: Obtain preset priorities of a plurality of scenario features.

Herein, the plurality of scenario features are preset to evaluate priorities of a driving scenario. The preset priority of the scenario feature indicates an importance degree of the scenario feature in the plurality of scenario features.

For the driving scenario and the preset priority of the scenario feature, refer to the descriptions of corresponding content in the foregoing embodiment. Details are not described herein again.

For example, the plurality of scenario features include but are not limited to a plurality of pieces of the following: scenario complexity, scenario criticality, scenario exposure, scenario reasonableness, and scenario accuracy. Herein, for description of each scenario feature, refer to the description of the corresponding scenario feature in the foregoing embodiment. Details are not described herein again.

In an implementation, obtaining the preset priorities of the plurality of scenario features includes: receiving the preset priorities that are of the plurality of scenario features and that are input by a user. Herein, the user may be, for example, a scenario tester or an autonomous driving system developer.

It may be understood that obtaining the preset priorities of the plurality of scenario features may be obtaining values of the preset priorities of the plurality of scenario features, or obtaining a value relationship between the preset priorities of the plurality of scenario features. This is not specifically limited herein. When the values of the preset priorities of the plurality of scenario features are obtained, the value relationship between the preset priorities of the plurality of scenario features may be determined based on the values of the preset priorities of the plurality of scenario features. For example, a larger value of the preset priority of the scenario feature indicates a higher preset priority of the scenario feature.

For example, the preset priorities that are of the plurality of scenario features and that are input by the user may be received by using any one of a touchscreen, a keyboard, a button, or a voice.

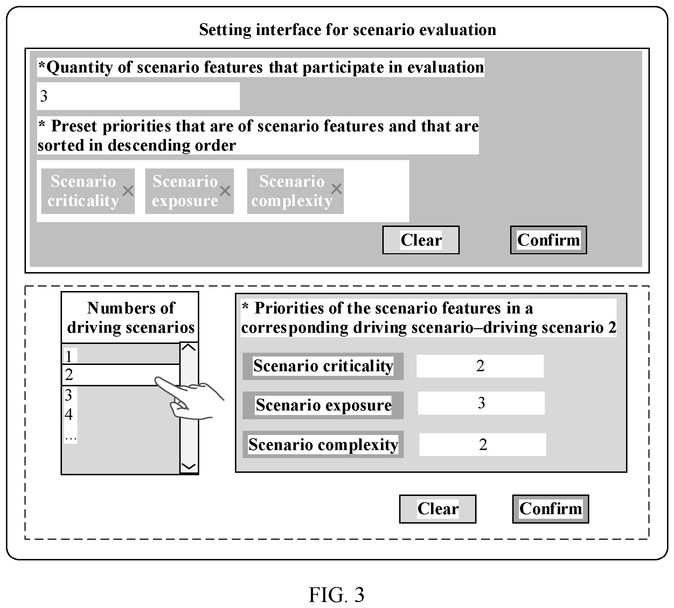

FIG. 3 is a diagram of a manual interaction interface according to an embodiment of this application. It can be seen from FIG. 3 that FIG. 3 shows a setting interface of a preset priority of a scenario feature. The interface includes an input box corresponding to a quantity of scenario features that participate in evaluation, an input box corresponding to preset priorities that are of scenario features and that are sorted in descending order, and the like. The user may define the quantity of scenario features based on the input box corresponding to the quantity of scenario features that participate in evaluation, and may define the value relationship between the preset priorities of the plurality of scenario features that participate in evaluation based on the input box corresponding to the preset priorities that are of the scenario features and that are sorted in descending order.

It can be seen that the setting interface of the preset priority of the scenario feature in FIG. 3 further includes a "Clear" button and a "Confirm" button. The "Clear" button indicates that information input by the user in the setting interface of the preset priority of the scenario feature is requested to be cleared, and the "Confirm" button indicates that the information input by the user in the setting interface of the preset priority of the scenario feature is saved.

It may be understood that the setting interface of the preset priority of the scenario feature in FIG. 3 is merely an example, and a setting interface is not limited to only the setting interface of the preset priority of the scenario feature shown in FIG. 3. For example, the setting interface may include more or less information than that in the current setting interface of the preset priority. For example, the input box corresponding to the quantity of scenario features that participate in evaluation in FIG. 3 may be deleted, or an input box corresponding to the scenario feature and an input box corresponding to the preset priority of the scenario feature may be added to the setting interface of the preset priority of the scenario feature. In some possible embodiments, in the setting interface of the preset priority of the scenario feature shown in FIG. 3, the input box corresponding to the preset priorities that are of the scenario features and that are sorted in descending order may alternatively be replaced with the input box corresponding to the scenario feature and the input box corresponding to the preset priority of the scenario feature.

The manual interaction interface shown in FIG. 3 may be presented on a touchscreen. The following uses an example in which the user inputs the preset priorities of the plurality of scenario features on the touchscreen based on FIG. 3 for description. In FIG. 3, it is assumed that the user inputs "3" in the input box corresponding to the quantity of scenario features that participate in evaluation, sequentially inputs "scenario criticality, scenario exposure, and scenario complexity" in the input box corresponding to the preset priorities that are of the scenario features and that are sorted in descending order, and then taps the "Confirm" button. In this case, a control apparatus may learn that the scenario features that participate in evaluation include the scenario criticality, the scenario exposure, and the scenario complexity, where a preset priority of the scenario criticality is higher than a preset priority of the scenario exposure, and the preset priority of the scenario exposure is higher than a preset priority of the scenario complexity.

S202: Obtain evaluation information of the driving scenario, where the evaluation information of the driving scenario is used to describe priorities of the plurality of scenario features in the driving scenario.

For the foregoing sub-priority, refer to the description of corresponding content in the foregoing embodiment. Details are not described herein again.

An example in which the plurality of scenario features include the scenario complexity, the scenario criticality, and the scenario exposure is used to describe the following solution. It is assumed that the preset priorities of the plurality of scenario features are sorted in descending order as follows: the preset priority of the scenario criticality > the preset priority of the scenario exposure > the preset priority of the scenario complexity. For definitions of sub-priorities of the three scenario features, refer to Table 1.

Table 1 shows a correspondence between a scenario feature and a value of a sub-priority. It can be seen from Table 1 that four values are defined for each of a sub-priority of the scenario criticality, a sub-priority of the scenario exposure, and a sub-priority of the scenario complexity.

For example, for the scenario feature, namely, the scenario exposure shown in Table 1, when a value of the sub-priority of the scenario exposure is "4", it indicates that a classification type of the scenario exposure is a very high occurrence probability; when a value of the sub-priority of the scenario exposure is "3", it indicates that a classification type of the scenario exposure is a moderate occurrence probability; when a value of the sub-priority of the scenario exposure is "2", it indicates that a classification type of the scenario exposure is a low occurrence probability; or when a value of the sub-priority of the scenario exposure is "1", it indicates that a classification type of the scenario exposure is almost no occurrence.

For another example, for the feature, namely, the scenario complexity shown in Table 1, when a value of the sub-priority of the scenario complexity is "4", it indicates that a classification type of the scenario complexity is basically non-complex; when a value of the sub-priority of the scenario complexity is "3", it indicates that a classification type of the scenario complexity is slightly complex; when a value of the sub-priority of the scenario complexity is "2", it indicates that a classification type of the scenario complexity is moderately complex; or when a value of the sub-priority of the scenario complexity is "1", it indicates that a classification type of the scenario complexity is highly complex.

In Table 1, a larger value of the sub-priority of the scenario feature indicates a higher sub-priority of the scenario feature. For example, when a value of the sub-priority of the scenario criticality is "4", the sub-priority of the scenario criticality is higher than a sub-priority of the scenario criticality whose value of the sub-priority is another value (for example, "1", "2", or "3"); or when a value of the sub-priority of the scenario criticality is "1", the sub-priority of the scenario criticality is lower than a sub-priority of the scenario criticality whose value of the sub-priority is another value (for example, "4", "2", or "3"). A sub-priority of the scenario criticality "moderately critical" (in other words, the value of the sub-priority is "3") is higher than a sub-priority of the scenario criticality "slightly critical" (in other words, the value of the sub-priority is "2").

Table 1

| Scenario feature | Value of a sub-priority | | | |
|---|---|---|---|---|
| | 4 | 3 | 2 | 1 |
| Scenario criticality | Highly critical | Moderately critical | Slightly critical | Basically non-critical |
| Scenario exposure | Very high occurrence probability | Moderate occurrence probability | Low occurrence probability | Almost no occurrence |
| Scenario complexity | Basically non-complex | Slightly complex | Moderately complex | Highly complex |

It may be understood that Table 1 is merely intended to clearly and intuitively present a possible classification form of the sub-priority of the scenario feature, and does not limit the correspondence between the scenario feature and the sub-priority value to that shown in Table 1. In an implementation, different scenario features may correspond to different quantities of classification types. For example, the scenario feature, namely, the scenario criticality, has three classification types, and therefore the sub-priority of the scenario criticality has three values; and the scenario feature, namely, the scenario exposure, has four classification types, and therefore a sub-priority of the scenario exposure has four values. In another implementation, it may alternatively define a sub-priority of the scenario feature, where a smaller value indicates a higher sub-priority of the scenario feature. In this case, the scenario criticality is used as an example. When a classification type of the scenario criticality is "highly critical", the value of the sub-priority of the scenario criticality is "1"; when a classification type of the scenario criticality is "moderately critical", the value of the sub-priority of the scenario criticality is "2"; when a classification type of the scenario criticality is "slightly critical", the value of the sub-priority of the scenario criticality is "3; or when a classification type of the scenario criticality is "basically non-critical", the value of the sub-priority of the scenario criticality is "4".

In some possible embodiments, in the evaluation information of the driving scenario, sub-priorities of the plurality of scenario features are arranged based on the value relationship between the preset priorities of the plurality of scenario features. For example, the value relationship between the preset priorities of the plurality of scenario features is an ascending order of the preset priorities of the plurality of scenario features or a descending order of the preset priorities of the plurality of scenario features.

For example, it is assumed that the descending order of the preset priorities of the plurality of scenario features is as follows: a preset priority of the scenario criticality > a preset priority of the scenario exposure > a preset priority of the scenario complexity. Based on a definition of a sub-priority of each scenario feature shown in Table 1, a driving scenario 1 belongs to the M driving scenarios. It is assumed that evaluation information of the driving scenario 1 is represented as "431". If the sub-priorities of the plurality of scenario features in the evaluation information of the driving scenario 1 are sorted in descending order of the preset priorities of the plurality of scenario features, it means that in the driving scenario 1, the value of the sub-priority of the scenario criticality is 4, the value of the sub-priority of the scenario exposure is 3, and the value of the sub-priority of the scenario complexity is 1. If the sub-priorities of the plurality of scenario features in the evaluation information of the driving scenario 1 are sorted in ascending order of the preset priorities of the plurality of scenario features, it means that in the driving scenario 1, the value of the sub-priority of the scenario complexity is 4, the value of the sub-priority of the scenario exposure is 3, and the value of the sub-priority of the scenario criticality is 1.

In an implementation, obtaining the evaluation information of the driving scenario includes: receiving the evaluation information that is of the driving scenario and that is input by the user. It may be understood that a quantity of received evaluation information of the driving scenario is related to a quantity of driving scenarios. Each driving scenario corresponds to one piece of evaluation information, and therefore the M driving scenarios have M pieces of evaluation information, where M is an integer greater than 1.

Herein, the user may be a scenario tester, an autonomous driving system developer, or the like.

For example, the evaluation information that is of the driving scenario and that is input by the user may be received by using any one of a touchscreen, a keyboard, a button, or a voice.

FIG. 3 is a diagram of a manual interaction interface according to an embodiment of this application. It can be seen from FIG. 3 that FIG. 3 not only shows the setting interface of the preset priority of the scenario feature (that is, as shown in a solid line box above a dashed line box), but also shows a setting interface of a sub-priority of the scenario feature (that is, a priority of the scenario feature in the driving scenario) (that is, as shown in the dashed line box). For the setting interface of the preset priority of the scenario feature, refer to the descriptions of corresponding content in S201. Details are not described herein again.

In FIG. 3, the setting interface of the sub-priority of the scenario feature includes a selection box corresponding to numbers of driving scenarios, an input box of a priority of a corresponding scenario feature in a corresponding driving scenario, and the like. The numbers of the driving scenarios include numbers of to-be-evaluated driving scenarios. For example, the numbers of the driving scenarios are 1, 2, 3, ..., and M. In the setting interface of the sub-priority of the scenario feature, when the user selects a number "2" of a driving scenario, it indicates that the driving scenario 2 is selected. Input boxes on the right of scenario features listed in the dashed line box in FIG. 3 are used to set priorities (namely, sub-priorities) of the corresponding scenario features in the driving scenario 2. Herein, the scenario features displayed in the setting interface of the sub-priority of the scenario feature are generated based on a setting of the user in FIG. 3 in the setting interface of the preset priority of the scenario feature shown in FIG. 3.

It can be seen that the setting interface of the sub-priority of the scenario feature in FIG. 3 further includes a "Clear" button and a "Confirm" button. The "Clear" button indicates that a priority of each scenario feature set by the user in the currently selected driving scenario is requested to be cleared, and the "Confirm" button indicates that the priority of each scenario feature set by the user in the currently selected driving scenario is saved. It may be understood that when the user taps the "Confirm" button, evaluation information of the currently selected driving scenario is generated.

The following uses an example in which the user inputs the evaluation information of the driving scenario on the touchscreen based on FIG. 3 for description. In FIG. 3, it is assumed that the driving features that have been set by the user and that participate in evaluation include "the scenario criticality, the scenario exposure, and the scenario complexity". For example, the user selects the number "2" of the driving scenario, in other words, the user selects the driving scenario 2. Correspondingly, input boxes of priorities of scenario features (namely, the scenario criticality, the scenario exposure, and the scenario complexity) in the driving scenario 2 are displayed on the right. It is assumed that the user inputs "2" in an input box corresponding to the scenario criticality, inputs "3" in an input box corresponding to the scenario exposure, inputs "3" in an input box corresponding to the scenario complexity, and then taps the "Confirm" button. It indicates that evaluation information of the driving scenario 2 is generated, and the evaluation information of the driving scenario 2 is used to provide description that a priority of the scenario criticality in the driving scenario 2 is 2, a priority of the scenario exposure in the driving scenario is 3, and a value of a priority of the scenario complexity in the driving scenario 2 is 2.

It may be understood that the setting interface of the sub-priority of the scenario feature shown in FIG. 3 is merely an example, and does not limit the setting interface of the sub-priority of the scenario feature to that shown in FIG. 3. When there are a plurality of driving scenarios, for example, the setting interface of the sub-priority of the scenario feature shown in FIG. 3 may alternatively not include the selection box of the numbers of the driving scenarios, but directly display each driving scenario and an input box of a priority of each scenario feature in a corresponding driving scenario, or directly set a text information import box, where evaluation information of at least one driving scenario may be imported by using the text import box.

In some possible embodiments, the setting interface of the preset priority of the scenario feature shown in FIG. 3 and the setting interface of the sub-priority of the scenario feature shown in FIG. 3 may not be displayed in a same interface, but are split into a plurality of interfaces for respective display.

For example, when there are M to-be-evaluated driving scenarios, the M pieces of evaluation information of the M driving scenarios may be obtained through the manual interaction interface shown in FIG. 3.

Further, to improve efficiency of subsequently evaluating priorities of the M driving scenarios, a manner of arranging the priorities of the plurality of scenario features in the driving scenario may be agreed on in evaluation information of the different driving scenarios. For example, based on input information shown in FIG. 3, it is determined that the preset priorities of the scenario features are sorted in descending order as follows: the scenario criticality > the scenario exposure > the scenario complexity. For example, it is agreed that the priorities of the plurality of scenario features in each driving scenario in evaluation information of the driving scenario are sorted in descending order of the preset priorities of the plurality of scenario features. If the evaluation information of each driving scenario is represented by an array, the first bit from the left in the array is set to store a priority of the scenario criticality in the driving scenario, the second bit from the left in the array is set to store a priority of the scenario exposure in the driving scenario, and the third bit from the left in the array is set to store a priority of the scenario complexity in the driving scenario. In this way, based on input information of the priorities of the scenario features in the driving scenario 2 shown in FIG. 3, the evaluation information of the driving scenario 2 may be represented by an array "232". In this way, the evaluation information of the driving scenario not only describes the priorities of the plurality of scenario features in the driving scenario, but also may indicate the value relationship between the preset priorities of the plurality of scenario features by specifying an arrangement order of the priorities of the plurality of scenario features in the driving scenario. This helps improve efficiency of evaluating the priority of the driving scenario.

S203: Determine the priorities of the M driving scenarios based on the preset priorities of the plurality of scenario features and the M pieces of evaluation information of the M driving scenarios, where M is an integer greater than 1.

For example, the M pieces of evaluation information of the M driving scenarios are input by the user. For example, the user inputs the M pieces of evaluation information of the M driving scenarios through the manual interaction interface shown in FIG. 3. That is, each driving scenario corresponds to one piece of evaluation information.

Herein, the preset priorities of the plurality of scenario features may be historically set by the user, or may be currently input by the user. In other words, preset priorities of the plurality of scenario features remain unchanged in different driving scenarios.

In this embodiment of this application, determining the priorities of the M driving scenarios based on the preset priorities of the plurality of scenario features and the M pieces of evaluation information of the M driving scenarios includes: in descending order of the preset priorities of the scenario features, separately comparing the sub-priorities of the corresponding scenario features in the M pieces of evaluation information, to obtain a sorting result of the M pieces of evaluation information, and determining the priorities of the M driving scenarios based on the sorting result of the M pieces of evaluation information.

For example, it is assumed that three scenario features are used to evaluate priorities of the driving scenario, and preset priorities of the three scenario features are sorted in descending order as follows: a scenario feature 1 > a scenario feature 2 > a scenario feature 3. A specific process of determining the priorities of the M driving scenarios in the foregoing sorting manner may be as follows: For the M pieces of evaluation information of the M driving scenarios, sub-priorities of the scenario feature 1 in all the evaluation information are first compared. To be specific, a higher priority of the scenario feature 1 in a driving scenario in evaluation information indicates higher ranking of the evaluation information in the M pieces of evaluation information, and a higher priority of the driving scenario corresponding to the evaluation information. When the sub-priorities of the scenario feature 1 are the same, sub-priorities of the scenario feature 2 are compared. To be specific, a higher priority of the scenario feature 2 in a driving scenario in evaluation information indicates higher ranking of the evaluation information in the M pieces of evaluation information, and a higher priority of the driving scenario corresponding to the evaluation information. When the sub-priorities of the scenario feature 1 are the same and the sub-priorities of the scenario feature 2 are the same, sub-priorities of the scenario feature 3 are compared. To be specific, a higher priority of the scenario feature 3 in a driving scenario in evaluation information indicates higher ranking of the evaluation information in the M pieces of evaluation information, and a higher priority of the driving scenario corresponding to the evaluation information. It may be understood that a quantity of scenario features is not limited in embodiments of this application. When the quantity of scenario features used for scenario priority evaluation may alternatively be 2, 4, 5, or another value, the priorities of the M driving scenarios may alternatively be determined based on a ranking idea of the foregoing method.

In an implementation, the plurality of scenario features include a first feature and a second feature, where a preset priority of the first feature is higher than a preset priority of the second feature. After the priorities of the M driving scenarios are determined in the foregoing manner, for any two driving scenarios in the M driving scenarios, for example, a first driving scenario and a second driving scenario, a priority of the first driving scenario and a priority of the second driving scenario meet any one of the following cases:

case 1: if a priority of the first feature in the first driving scenario is higher than a priority of the first feature in the second driving scenario, the priority of the first driving scenario is higher than the priority of the second driving scenario; or
case 2: if a priority of the first feature in the first driving scenario is the same as a priority of the first feature in the second driving scenario and a priority of the second feature in the first driving scenario is higher than a priority of the second feature in the second driving scenario, the priority of the first driving scenario is higher than the priority of the second driving scenario; or
case 3: if a priority of the first feature in the first driving scenario is the same as a priority of the first feature in the second driving scenario and a priority of the second feature in the first driving scenario is the same as a priority of the second feature in the second driving scenario, the priority of the first driving scenario is the same as the priority of the second driving scenario.

In addition to the foregoing case 1 to case 3, it may be understood that if the priority of the first feature in the first driving scenario is lower than the priority of the first feature in the second driving scenario, the priority of the first driving scenario is lower than the priority of the second driving scenario; or if the priority of the first feature in the first driving scenario is the same as the priority of the first feature in the second driving scenario, and the priority of the second feature in the first driving scenario is lower than the priority of the second feature in the second driving scenario, the priority of the first driving scenario is lower than the priority of the second driving scenario.

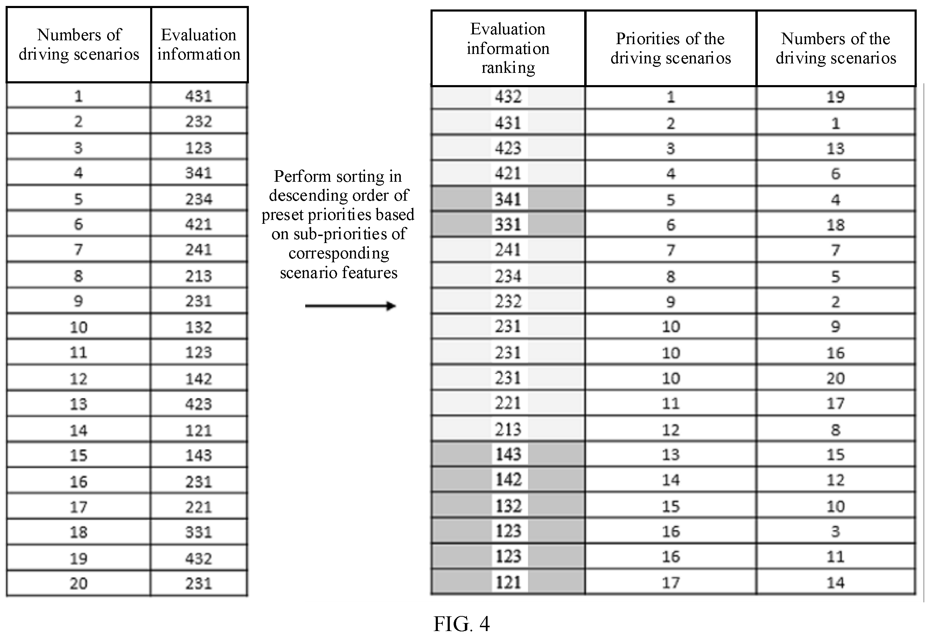

The following describes application of the foregoing implementation in detail based on FIG. 4.

FIG. 4 is a diagram of a process of determining priorities of a plurality of driving scenarios according to an embodiment of this application. For example, a plurality of scenario features are scenario complexity, scenario criticality, and scenario exposure. Preset priorities of the three scenario features are sorted in descending order as follows: the scenario criticality > the scenario exposure > the scenario complexity. It can be seen from FIG. 4 that FIG. 4 shows evaluation information of 20 driving scenarios. For a definition of a sub-priority of the scenario feature, refer to Table 1. In addition, in Table 1, a larger value of the sub-priority of the scenario feature (namely, a priority of the scenario feature in the driving scenario) indicates a higher sub-priority of the scenario feature. It is assumed that in evaluation information of each driving scenario, priorities of the three scenario features in the driving scenario are sequentially arranged from left to right in descending order of the preset priorities of the scenario features. In this case, evaluation information "431" of a driving scenario numbered "1" indicates that a priority of the scenario criticality in the driving scenario 1 is "4", a priority of the scenario exposure in the driving scenario 1 is "3", and a priority of the scenario complexity in the driving scenario 1 is "1". For the evaluation information of the 20 driving scenarios shown in FIG. 4, the 20 pieces of evaluation information are sorted in descending order of the preset priorities of the scenario features based on sub-priorities of the scenario features in each evaluation information. In this way, a sorting result may be obtained, that is, "evaluation information sorting" shown in FIG. 4 (a first column in a three-column table on a right side of an arrow). It can be seen from the sorting result of the evaluation information shown in FIG. 4 that evaluation information "432" of a driving scenario numbered "19" is sorted at the foremost, and therefore, a priority of the driving scenario numbered "19" is the highest; evaluation information "121" of a driving scenario numbered "14" is sorted at the end, and therefore, a priority of the driving scenario numbered "14" is the lowest; and evaluation information of driving scenarios numbered "9", "16", and "20" is the same, and therefore, priorities of the driving scenarios numbered "9", "16", and "20" are the same.

It may be understood that FIG. 4 is merely an example of evaluating priorities of the 20 driving scenarios by using the three scenario features from two dimensions: the preset priorities of the scenario features and the priorities of the scenario features in the driving scenarios. This does not limit a quantity of scenario features used when priorities of the driving scenarios are evaluated and a quantity of driving scenarios.

In some possible embodiments, a total quantity of the plurality of scenario features is S. It is assumed that a preset priority of an $i^{th}$ scenario feature is greater than a preset priority of an $(i+1)^{th}$ scenario feature, and i is an integer greater than or equal to 1 and less than S. Determining the priorities of the M driving scenarios based on the preset priorities of the plurality of scenario features and the M pieces of evaluation information of the M driving scenarios includes: collecting statistics on the preset priorities of the plurality of scenario features and the M pieces of evaluation information of the M driving scenarios by using a ranking function, to determine the priorities of the M driving scenarios, where the ranking function is a sum of S parts, an $i^{th}$ part is represented by an $i^{th}$ coefficient and a priority of the $i^{th}$ scenario feature in the driving scenario, and a value of each coefficient in the ranking function meets the following constraint condition: a minimum value of the $i^{th}$ part is greater than a maximum value of a sum of an $(i+1)^{th}$ part, an $(i+2)^{th}$ part, ..., and an $S^{th}$ part in the S parts.

In an implementation, that the $i^{th}$ part is represented by the $i^{th}$ coefficient and the priority of the $i^{th}$ scenario feature in the driving scenario may be that the $i^{th}$ part is represented as a function using the $i^{th}$ coefficient as a base and using the priority of the $i^{th}$ scenario feature in the driving scenario as an exponent. For example, the three scenario features are used to evaluate the scenario priorities. In this case, the ranking function may be constructed as Formula (1):

$$F1 = a1^{lp1} + b1^{lp2} + c1^{lp3} \qquad\qquad \text{Formula (1)}$$

Herein, $F1$ is a value of the ranking function, $lp1$ represents a priority of the scenario feature 1 in the driving scenario, $lp2$ represents a priority of the scenario feature 2 in the driving scenario, $lp3$ represents a priority of the scenario feature 3 in the driving scenario, and $a1$, $b1$ and $c1$ are coefficients. It is assumed that a preset priority of the scenario feature 1 is higher than a preset priority of the scenario feature 2, and the preset priority of the scenario feature 2 is higher than a preset priority of the scenario feature 3. In this case, values of $a1$, $b1$, and $c1$ satisfy the following constraint condition 1: $\begin{cases} (a1^{lp1})_{min} > (b1^{lp2} + c1^{lp3})_{max} \\ (b1^{lp2})_{min} > (c1^{lp3})_{max} \end{cases}$. It may be understood that Formula (1) is merely an example of representation of the ranking function, and representation of the ranking function is not limited to Formula (1). The representation of the ranking function may alternatively be some variations based on Formula (1).

For example, it is assumed that the scenario feature 1 is the scenario criticality, the scenario feature 2 is the scenario exposure, and the scenario feature 3 is the scenario complexity. For a definition of the sub-priority of each scenario feature, refer to Table 1. It can be seen from Table 1 that a value set of the sub-priority of the scenario criticality is {1, 2, 3, 4}, a value set of the sub-priority of the scenario exposure is {1, 2, 3, 4}, and a value set of the sub-priority of the scenario complexity is {1, 2, 3, 4}. A process of determining the values of the coefficients $a1$, $b1$, and $c1$ in Formula (1) based on the constraint condition 1 may be as follows: For the constraint $(b1^{lp2})_{min} > (c1^{lp3})_{max}$, the values of the coefficients $b1$ and $c1$ are first determined based on $lp2 = 1$ and $lp3 = 4$; and for the constraint $(a1^{lp1})_{min} > (b1^{lp2} + c1^{lp3})_{max}$, the value of the coefficient a1 is determined based on $lp1 = 1$ and $lp2 = lp3 = 4$ and by substituting the values of $b1$ and $c1$.

In another implementation, that the $i^{th}$ part is represented by the $i^{th}$ coefficient and the priority of the $i^{th}$ scenario feature in the driving scenario may be that the $i^{th}$ part is a product of the $i^{th}$ coefficient and the priority of the $i^{th}$ scenario feature in the driving scenario. For example, the three scenario features are used to evaluate the scenario priorities. In this case, the ranking function may be constructed as Formula (2):

$$F2 = a2 * lp1 + b2 * lp2 + c2 * lp3 \qquad\qquad \text{Formula (2)}$$

Herein, F2 is a value of the ranking function, $lp1$ represents a priority of the scenario feature 1 in the driving scenario, *lp2* represents a priority of the scenario feature 2 in the driving scenario, *lp3* represents a priority of the scenario feature 3 in the driving scenario, and *a2*, *b*2, and *c*2 are coefficients. It is assumed that a preset priority of the scenario feature 1 is higher than a preset priority of the scenario feature 2, and the preset priority of the scenario feature 2 is higher than a preset priority of the scenario feature 3. In this case, values of *a2*, *b*2, and *c*2 satisfy the following constraint condition

$$2: \begin{cases} (a2 * lp1)_{min} > (b2 * lp2 + c2 * lp3)_{max} \\ (b2 * lp2)_{min} > (c2 * lp3)_{max} \end{cases}$$ . It may be understood that Formula (2) is merely an example of representation of the ranking function, and representation of the ranking function is not limited to Formula (2). The representation of the ranking function may alternatively be some variations based on Formula (2). Details are not described herein.

For example, it is assumed that the scenario feature 1 is the scenario criticality, the scenario feature 2 is the scenario exposure, and the scenario feature 3 is the scenario complexity. For a definition of the sub-priority of each scenario feature, refer to Table 1. It can be seen from Table 1 that a value set of the sub-priority of the scenario criticality is {1, 2, 3, 4}, a value set of the sub-priority of the scenario exposure is {1, 2, 3, 4}, and a value set of the sub-priority of the scenario complexity is {1, 2, 3, 4}. A process of determining the values of *a2*, *b*2, and *c*2 in Formula (2) based on the constraint condition 2 may be as follows: For the constraint $(b2 * lp2)_{min} > (c2 * lp3)_{max}$, the values of the coefficients *b*2 and *c*2 are first determined based on *lp2* = 1 and *lp3* = 4 ; and for the constraint $(a2 * lp1)_{min} > (b2 * lp2 + c2 * lp3)_{max}$, the value of the coefficient a2 is determined based on *lp*1 = 1 and *lp*2 = *lp*3 = 4 and by substituting the determined values of *b*2 and *c*2.

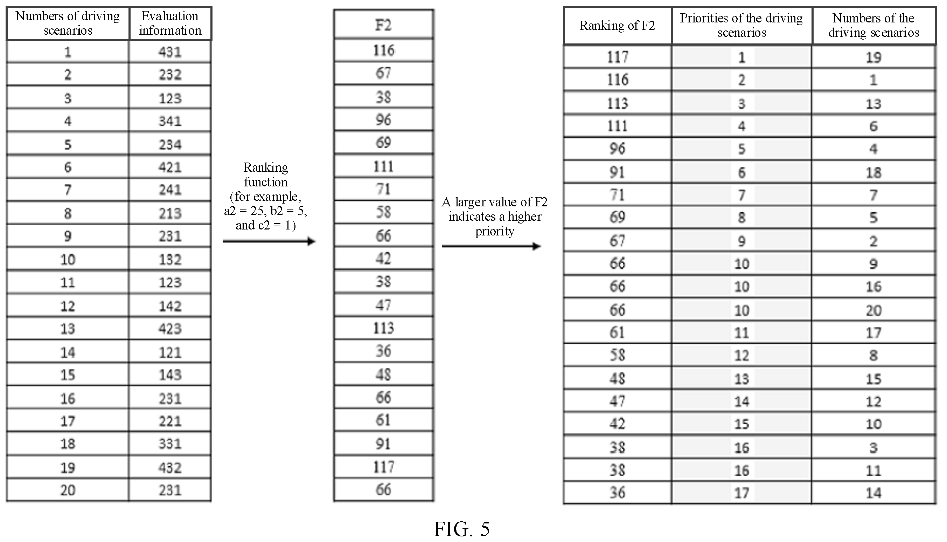

The following describes application of the foregoing implementation in detail based on FIG. 5.

FIG. 5 is a diagram of another process of determining priorities of a plurality of driving scenarios according to an embodiment of this application. For example, a plurality of scenario features are scenario complexity, scenario criticality, and scenario exposure. Preset priorities of the three scenario features are sorted in descending order as follows: the scenario criticality > the scenario exposure > the scenario complexity. For 20 pieces of evaluation information of 20 driving scenarios shown in FIG. 5, refer to the descriptions of corresponding content in FIG. 4. Details are not described herein again. For the 20 pieces of evaluation information shown in FIG. 5, for example, the ranking function *F*2 shown in Formula (2) is used. In Formula (2), *lp*1 corresponds to the scenario criticality, *lp*2 corresponds to the scenario exposure, *lp*3 corresponds to the scenario complexity. For example, the values of the coefficients *a2*, *b*2, and *c*2 meet a set of values *a2* = 25, *b*2 =, and *c*2 = 1 of the foregoing constraint condition 2. The ranking function *F*2 is used to collect statistics on the preset priorities of the three scenario features and the 20 pieces of evaluation information, to obtain a ranking function value corresponding to each driving scenario. The ranking function values corresponding to the driving scenarios are sorted in descending order. A larger ranking function value corresponding to a driving scenario indicates a higher priority of the driving scenario. In this way, priorities of the 20 driving scenarios can be determined. It can be seen from a sorting result of F2 shown in FIG. 5 that a priority of a driving scenario numbered "19" is the highest, a priority of a driving scenario numbered "14" is the lowest, and priorities of driving scenarios numbered "9", "16", and "20" are the same.

It may be understood that FIG. 5 is merely an example of evaluating priorities of the 20 driving scenarios by using the three scenario features from two dimensions: the preset priorities of the scenario features and the priorities of the scenario features in the driving scenarios. This does not limit a quantity of scenario features used when priorities of the driving scenarios are evaluated and a quantity of driving scenarios.

It can be learned that, in this embodiment of this application, the preset priorities of the plurality of scenario features that participate in evaluation are defined to indicate ranking of importance of the plurality of scenario features. Priority information of the plurality of scenario features in different driving scenarios may be used to more finely describe the different driving scenarios. In this way, the priorities of the plurality of driving scenarios are comprehensively determined from two dimensions: the preset priorities of the scenario features and the priorities of the scenario features in the driving scenarios. This can improve accuracy of evaluating the priority of the driving scenario.

In some possible embodiments, the priority of the driving scenario may be applied to test scenario screening.

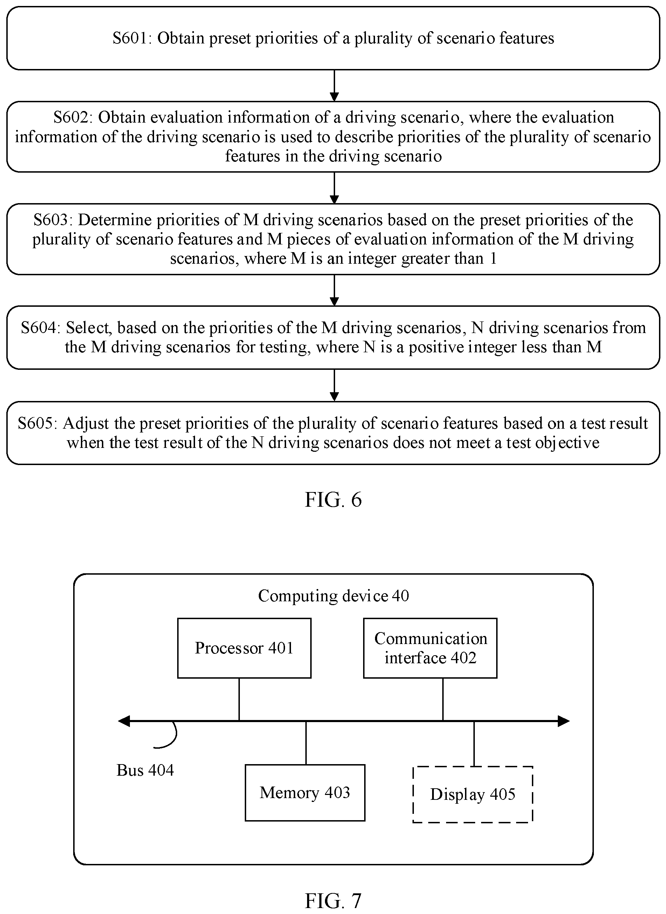

FIG. 6 is a flowchart of another scenario priority determining method according to an embodiment of this application. The method may be applied to the processing apparatus shown in FIG. 1. For details about S601 to S603 in the method shown in FIG. 6, refer to the related descriptions of S201 to S203 in the embodiment in FIG. 2. Details are not described herein again. In addition, the method further includes the following steps.

S604: Select, based on the priorities of the M driving scenarios, N driving scenarios from the M driving scenarios for testing, where N is a positive integer less than M.

In an implementation, the N driving scenarios with higher priorities are selected based on the priorities of the M driving scenarios from the M driving scenarios for testing. Herein, the N driving scenarios with higher priorities may be determined based on a sorting result of the priorities of the M driving scenarios in descending order. In this way, when test resources and test costs are limited, a part of driving scenarios with higher importance degrees may be selected from a plurality of driving scenarios for testing based on ranking of priorities of the plurality of driving scenarios. This can improve driving scenario test efficiency.

For example, the N driving scenarios include a first driving scenario and a second driving scenario. If a priority of the first driving scenario is higher than a priority of the second driving scenario, the first driving scenario is tested before the second driving scenario. In this way, a value of the priority of the driving scenario affects a test order of the driving scenario, and a driving scenario with a higher priority may be first tested.

S605: Adjust the preset priorities of the plurality of scenario features based on a test result when the test result of the N driving scenarios does not meet a test objective.

Herein, the test objective is related to the scenario feature. For example, the test objective includes test sub-objectives corresponding to the plurality of scenario features.

For example, adjusting the preset priorities of the plurality of scenario features based on the test result may be: adjusting preset priorities of a part or all of the plurality of scenario features based on the test result.

For example, the plurality of scenario features include a scenario feature 1, a scenario feature 2, and a scenario feature 3. The preset priorities of the plurality of scenario features are sorted in descending order as follows: the scenario feature 1 > the scenario feature 2 > the scenario feature 3. An example in which the test result of the N driving scenarios does not meet a test sub-objective corresponding to the scenario feature 3 in the test objective is used. In this case, adjusting the preset priorities of the plurality of scenario features based on the test result may be increasing a preset priority of the scenario feature 3 in the plurality of scenario features based on the test result. For example, after the adjustment, the preset priorities of the plurality of scenario features may be sorted in descending order as follows: the scenario feature 1 > the scenario feature 3 > the scenario feature 2, or the scenario feature 3 > the scenario feature 1 > the scenario feature 2, or the scenario feature 3 > the scenario feature 2 > the scenario feature 1. This is not specifically limited herein.

For example, the scenario feature 3 is the scenario complexity, and the test sub-objective corresponding to the scenario feature 3 may be that scenario coverage needs to reach a preset threshold.

Herein, the test result of the N driving scenarios may be a statistical result obtained based on test outputs of the N driving scenarios, or may be a test output of at least one of the N driving scenarios.

It can be learned that in this embodiment of this application, the part of driving scenarios with higher priorities are selected from the plurality of driving scenarios for testing based on the priorities of the driving scenarios. This can reduce the test resources and the test costs of the driving scenarios, and improve test efficiency. In addition, the preset priorities of the plurality of scenario features that participate in scenario priority evaluation are adjusted based on test result feedback, to change ranking of importance of at least two scenario features. In this way, the test result of the driving scenario can better meet the test objective.

In embodiments of this application, the priority determining apparatus shown in FIG. 1 may be implemented by using hardware, software, or a combination of software and hardware.

For example, the priority determining apparatus shown in FIG. 1 may be configured to implement the method described in the embodiment in FIG. 2. In the embodiment in FIG. 2, the obtaining unit may be configured to perform S201 and S202, and the processing unit may be configured to perform S203.

In some possible embodiments, the priority determining apparatus shown in FIG. 1 further includes a test unit. In this case, the priority determining apparatus shown in FIG. 1 may further implement the method described in the embodiment in FIG. 6. In the embodiment in FIG. 6, the obtaining unit may be configured to perform S601 and S602, the processing unit may be configured to perform S603, and the test unit may be configured to perform S604 and S605.

It should be understood that division into the units in the priority determining apparatus shown in FIG. 1 is merely division into logical functions. In actual implementation, all or some of the units may be integrated into one physical entity, or may be physically separated. In addition, the unit in the apparatus may be implemented in a form of software invoked by a processor. For example, the apparatus includes the processor, the processor is connected to a memory, the memory stores instructions, and the processor invokes the instructions stored in the memory, to implement any one of the foregoing methods or to implement functions of the units in the apparatus. The processor is, for example, a general-purpose processor, for example, a central processing unit (central processing unit, CPU) or a microprocessor, and the memory is a memory in the apparatus or a memory outside the apparatus. Alternatively, the unit in the apparatus may be implemented in a form of hardware circuit, and the functions of a part or all of the units may be implemented by using a design of the hardware circuit. The hardware circuit may be understood as one or more processors. For example, in an implementation, the hardware circuit is an application-specific integrated circuit (application-specific integrated circuit, ASIC), and functions of a part or all of the units are implemented by using a design of a logical relationship between elements in the circuit. For another example, in another implementation, the hardware circuit may be implemented by using a programmable logic device (programmable logic device, PLD). A field programmable gate array (field programmable gate array, FPGA) is used as an example. The field programmable gate array may include a large quantity of logic gate circuits, and a connection relationship between the logic gate circuits is configured by using a configuration file, to implement the functions of the part or all of the foregoing units. All the units of the foregoing apparatus may be implemented in the form of the software invoked by the processor, or all the units may be implemented in the form of the hardware circuit, or the part of units may be implemented in the form of the software invoked by the processor, and the remaining part may be implemented in the form of the hardware circuit.

In embodiments of this application, the processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or may be reconfigurable. For example, the processor is a hardware circuit implemented by an application-specific integrated circuit (application-specific integrated circuit, ASIC) or a programmable logic device (programmable logic device, PLD), for example, an FPGA. In the reconfigurable hardware circuit, a process in which the processor loads a configuration document to implement hardware circuit configuration may be understood as a process in which the processor loads instructions to implement functions of the part or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU).

It can be learned that each unit of the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units of the foregoing apparatus may be integrated together, or may be implemented independently. In an implementation, these units are integrated together, and implemented in a form of a system-on-a-chip (system-on-a-chip, SOC). The SOC may include at least one processor, configured to implement any one of the methods or implement functions of the units of the apparatus. Types of the at least one processor may be different. For example, the at least one processor includes a CPU and an FPGA, a CPU and an artificial intelligence processor, or a CPU and a GPU.

FIG. 7 is a diagram of a structure of a computing device according to an embodiment of this application. As shown in FIG. 7, the computing device 40 includes a processor 401, a communication interface 402, a memory 403, and a bus 404. The processor 401, the memory 403, and the communication interface 402 communicate with each other through the bus 404. It should be understood that a quantity of processors and a quantity of memories in the computing device 40 are not limited in this application.

In an implementation, the computing device 40 may be a network side device. For example, the network side device may be a server (for example, a scenario priority evaluation server or a simulation test server) deployed on a network side, or a component or a chip in the server, or a system-level device including a plurality of servers. The network side device may be deployed in a cloud environment or an edge environment. This is not specifically limited herein.

The bus 404 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is represented by using only one line in FIG. 7, but it does not mean that there is only one bus or only one type of bus. The bus 404 may include a path for transmitting information between components (for example, the memory 403, the processor 401, and the communication interface 402) of the computing device 40.

For the processor 401, refer to related descriptions of the processor in the foregoing embodiment. Details are not described herein again.

The memory 403 is configured to provide storage space, and the storage space may store data, for example, an operating system and a computer program. The memory 403 may be one or a combination of a random access memory (random access memory, RAM), an erasable programmable read-only memory (erasable programmable read-only memory, EPROM), a read-only memory (read-only memory, ROM), a compact disc read-only memory (compact disc read-only memory, CD-ROM), or the like. The memory 403 may exist independently, or may be integrated into the processor 401.

The communication interface 402 may be configured to provide an information input or output for the processor 401. Alternatively, the communication interface 402 may be configured to receive data sent from the outside and/or send data to the outside, and may be a wired link interface including an Ethernet cable, or may be a wireless link (for example, Wi-Fi, Bluetooth, or universal wireless transmission) interface. Alternatively, the communication interface 402 may further include a transmitter (for example, a radio frequency transmitter or an antenna), a receiver, or the like coupled to the interface.

In some possible embodiments, the computing device 40 further includes a display 405. The display 405 is connected to or coupled to the processor 401 through the bus 404. The display 405 may be configured to present a manual interaction interface to a user. For example, the user may input preset priorities of the plurality of scenario features and M pieces of evaluation information of the M driving scenarios through the manual interaction interface, where M is an integer greater than 1. The display 405 may be a display screen. The display screen may be a liquid crystal display (liquid crystal display, LCD), an organic or inorganic light-emitting diode (organic light-emitting diode, OLED), an active matrix organic light-emitting diode (active matrix organic light-emitting diode, AMOLED) panel, or the like.

The processor 401 in the computing device 40 is configured to read the computer program stored in the memory 403, to perform the foregoing method, for example, the method described in FIG. 2 or FIG. 6.

In a possible design manner, the computing device 40 may be one or more modules in an entity for executing the method shown in FIG. 2. The processor 401 may be configured to read one or more computer programs stored in the memory, to perform the following operations:

obtaining evaluation information of a driving scenario by using an obtaining unit, where the evaluation information of the driving scenario is used to describe priorities of the plurality of scenario features in the driving scenario; and determining priorities of the M driving scenarios based on the preset priorities of the plurality of scenario features and the M pieces of evaluation information of the M driving scenarios, where M is an integer greater than 1.

In the foregoing embodiments in this specification, the descriptions of embodiments have respective focuses. For a part that is not described in detail in an embodiment, refer to related descriptions in other embodiments. In addition, in embodiments of this application, unless otherwise stated or there is a logic conflict, terms and/or descriptions in all embodiments are consistent and may be mutually referenced, and technical features in different embodiments may be combined based on an internal logical relationship thereof, to form a new embodiment.

It should be noted that, a person of ordinary skill in the art may understand that, all or some of the steps in methods of the foregoing embodiments may be implemented by a program instructing related hardware. The program may be stored in a computer-readable storage medium. The storage medium includes a read-only memory (read-only memory, ROM), a random access memory (random access memory, RAM), a programmable read-only memory (programmable read-only memory, PROM), an erasable programmable read-only memory (erasable programmable read-only memory, EPROM), a one-time programmable read-only memory (one-time programmable read-only memory, OTPROM), an electrically-erasable programmable read-only memory, (electrically-erasable programmable read-only memory, EEPROM), a compact disc read-only memory (compact disc read-only memory, CD-ROM), or another optical disk memory, a magnetic disk memory, a magnetic tape memory, or any other computer-readable medium that can be configured to carry or store data.

The technical solutions of this application essentially, or the contributing part, or all or some of the technical solutions may be implemented in a form of a software product. The computer program product is stored in a storage medium and includes several instructions for enabling a device (which may be a personal computer, a server, a network device, a robot, a single-chip microcomputer, a chip, a robot, or the like) to perform all or some of the steps of the methods in embodiments of this application.

**Claims**

1. A scenario priority determining method, wherein the method comprises:

   obtaining evaluation information of a driving scenario, wherein the evaluation information of the driving scenario is used to describe priorities of a plurality of scenario features in the driving scenario; and
   determining priorities of M driving scenarios based on preset priorities of the plurality of scenario features and M pieces of evaluation information of the M driving scenarios, wherein M is an integer greater than 1.

2. The method according to claim 1, wherein the method further comprises:
   selecting, based on the priorities of the M driving scenarios, N driving scenarios from the M driving scenarios for testing, wherein N is a positive integer less than M.

3. The method according to claim 2, wherein the method further comprises:
   adjusting the preset priorities of the plurality of scenario features based on a test result of the N driving scenarios when the test result of the N driving scenarios does not meet a test objective.

4. The method according to any one of claims 1 to 3, wherein the plurality of scenario features comprise a plurality of pieces of the following:
   scenario complexity, scenario criticality, scenario exposure, scenario reasonableness, and scenario accuracy.

5. The method according to any one of claims 1 to 4, wherein the preset priorities of the plurality of scenario features are set based on confidence of the plurality of scenario features or historical test experience.

6. The method according to any one of claims 1 to 5, wherein the plurality of scenario features comprise a first feature and a second feature, wherein a preset priority of the first feature is higher than a preset priority of the second feature; and the M driving scenarios comprise a first driving scenario and a second driving scenario, and a priority of the first driving scenario and a priority of the second driving scenario meet any one of the following cases:

if a priority of the first feature in the first driving scenario is higher than a priority of the first feature in the second driving scenario, the priority of the first driving scenario is higher than the priority of the second driving scenario; or

if a priority of the first feature in the first driving scenario is the same as a priority of the first feature in the second driving scenario and a priority of the second feature in the first driving scenario is higher than a priority of the second feature in the second driving scenario, the priority of the first driving scenario is higher than the priority of the second driving scenario; or

if a priority of the first feature in the first driving scenario is the same as a priority of the first feature in the second driving scenario and a priority of the second feature in the first driving scenario is the same as a priority of the second feature in the second driving scenario, the priority of the first driving scenario is the same as the priority of the second driving scenario.

7. The method according to any one of claims 1 to 5, wherein a total quantity of the plurality of scenario features is S, a preset priority of an $i^{th}$ scenario feature is greater than a preset priority of an $(i+1)^{th}$ scenario feature, and i is an integer greater than or equal to 1 and less than S; and

determining the priorities of the M driving scenarios based on the preset priorities of the plurality of scenario features and the M pieces of evaluation information of the M driving scenarios comprises: collecting statistics on the preset priorities of the plurality of scenario features and the M pieces of evaluation information by using a ranking function, to determine the priorities of the M driving scenarios, wherein
the ranking function is a sum of S parts, an $i^{th}$ part is represented by an $i^{th}$ coefficient and a priority of the $i^{th}$ scenario feature in the driving scenario, and a value of each coefficient in the ranking function meets the following constraint condition:
a minimum value of the $i^{th}$ part is greater than a maximum value of a sum of an $(i+1)^{th}$ part, an $(i+2)^{th}$ part, ..., and an $S^{th}$ part in the S parts.

8. The method according to any one of claims 1 to 7, wherein the preset priorities of the plurality of scenario features are input by a user.

9. A scenario priority determining apparatus, wherein the apparatus comprises:

an obtaining unit, configured to obtain evaluation information of a driving scenario, wherein the evaluation information of the driving scenario is used to describe priorities of a plurality of scenario features in the driving scenario; and
a processing unit, configured to determine priorities of M driving scenarios based on preset priorities of the plurality of scenario features and M pieces of evaluation information of the M driving scenarios, wherein M is an integer greater than 1.

10. The apparatus according to claim 9, wherein the apparatus further comprises a test unit; and
the test unit is configured to select, based on the priorities of the M driving scenarios, N driving scenarios from the M driving scenarios for testing, wherein N is a positive integer less than M.

11. The apparatus according to claim 10, wherein the test unit is further configured to:
adjust the preset priorities of the plurality of scenario features based on a test result of the N driving scenarios when the test result of the N driving scenarios does not meet a test objective.

12. The apparatus according to any one of claims 9 to 11, wherein the plurality of scenario features comprise a plurality of pieces of the following:
scenario complexity, scenario criticality, scenario exposure, scenario reasonableness, and scenario accuracy.

13. The apparatus according to any one of claims 9 to 12, wherein the preset priorities of the plurality of scenario features are set based on confidence of the plurality of scenario features or historical test experience.

14. The apparatus according to any one of claims 9 to 13, wherein the plurality of scenario features comprise a first feature and a second feature, wherein a preset priority of the first feature is higher than a preset priority of the second feature; and the M driving scenarios comprise a first driving scenario and a second driving scenario, and a priority of the first driving scenario and a priority of the second driving scenario meet any one of the following cases:

if a priority of the first feature in the first driving scenario is higher than a priority of the first feature in the second driving scenario, the priority of the first driving scenario is higher than the priority of the second driving scenario; or if a priority of the first feature in the first driving scenario is the same as a priority of the first feature in the second driving scenario and a priority of the second feature in the first driving scenario is higher than a priority of the second feature in the second driving scenario, the priority of the first driving scenario is higher than the priority of the second driving scenario; or if a priority of the first feature in the first driving scenario is the same as a priority of the first feature in the second driving scenario and a priority of the second feature in the first driving scenario is the same as a priority of the second feature in the second driving scenario, the priority of the first driving scenario is the same as the priority of the second driving scenario.

15. The apparatus according to any one of claims 9 to 13, wherein a total quantity of the plurality of scenario features is S, a preset priority of an $i^{th}$ scenario feature is greater than a preset priority of an $(i+1)^{th}$ scenario feature, and i is an integer greater than or equal to 1 and less than S; and

the processing unit is specifically configured to collect statistics on the preset priorities of the plurality of scenario features and the M pieces of evaluation information by using a ranking function, to determine the priorities of the M driving scenarios, wherein the ranking function is a sum of S parts, an $i^{th}$ part is represented by an $i^{th}$ coefficient and a priority of the $i^{th}$ scenario feature in the driving scenario, and a value of each coefficient in the ranking function meets the following constraint condition: a minimum value of the $i^{th}$ part is greater than a maximum value of a sum of an $(i+1)^{th}$ part, an $(i+2)^{th}$ part, ..., and an $S^{th}$ part in the S parts.

16. The apparatus according to any one of claims 9 to 15, wherein the preset priorities of the plurality of scenario features are input by a user.

17. A communication apparatus, wherein the apparatus comprises at least one processor and an interface circuit, and the processor is configured to execute instructions and/or exchange data by using the interface circuit, so that the apparatus performs the method according to any one of claims 1 to 8.

18. A computer-readable storage medium, comprising computer instructions, wherein when the computer instructions are run by a processor, the method according to any one of claims 1 to 8 is implemented.

Priority determining apparatus

Obtaining unit —— Processing unit

FIG. 1

S201: Obtain preset priorities of a plurality of scenario features

S202: Obtain evaluation information of a driving scenario, where the evaluation information of the driving scenario is used to describe priorities of the plurality of scenario features in the driving scenario

S203: Determine priorities of M driving scenarios based on the preset priorities of the plurality of scenario features and M pieces of evaluation information of the M driving scenarios, where M is an integer greater than 1

FIG. 2

**Setting interface for scenario evaluation**

**\*Quantity of scenario features that participate in evaluation**

3

**\* Preset priorities that are of scenario features and that are sorted in descending order**

Scenario criticality ×　　Scenario exposure ×　　Scenario complexity ×

Clear　　Confirm

**Numbers of driving scenarios**

1
2
3
4
...

**\* Priorities of the scenario features in a corresponding driving scenario–driving scenario 2**

| Scenario criticality | 2 |
| Scenario exposure | 3 |
| Scenario complexity | 2 |

Clear　　Confirm

FIG. 3

| Numbers of driving scenarios | Evaluation information |
|---|---|
| 1 | 431 |
| 2 | 232 |
| 3 | 123 |
| 4 | 341 |
| 5 | 234 |
| 6 | 421 |
| 7 | 241 |
| 8 | 213 |
| 9 | 231 |
| 10 | 132 |
| 11 | 123 |
| 12 | 142 |
| 13 | 423 |
| 14 | 121 |
| 15 | 143 |
| 16 | 231 |
| 17 | 221 |
| 18 | 331 |
| 19 | 432 |
| 20 | 231 |

Perform sorting in descending order of preset priorities based on sub-priorities of corresponding scenario features

$\longrightarrow$

| Evaluation information ranking | Priorities of the driving scenarios | Numbers of the driving scenarios |
|---|---|---|
| 432 | 1 | 19 |
| 431 | 2 | 1 |
| 423 | 3 | 13 |
| 421 | 4 | 6 |
| 341 | 5 | 4 |
| 331 | 6 | 18 |
| 241 | 7 | 7 |
| 234 | 8 | 5 |
| 232 | 9 | 2 |
| 231 | 10 | 9 |
| 231 | 10 | 16 |
| 231 | 10 | 20 |
| 221 | 11 | 17 |
| 213 | 12 | 8 |
| 143 | 13 | 15 |
| 142 | 14 | 12 |
| 132 | 15 | 10 |
| 123 | 16 | 3 |
| 123 | 16 | 11 |
| 121 | 17 | 14 |

FIG. 4

EP 4 752 759 A1

| Numbers of driving scenarios | Evaluation information |
|---|---|
| 1 | 431 |
| 2 | 232 |
| 3 | 123 |
| 4 | 341 |
| 5 | 234 |
| 6 | 421 |
| 7 | 241 |
| 8 | 213 |
| 9 | 231 |
| 10 | 132 |
| 11 | 123 |
| 12 | 142 |
| 13 | 423 |
| 14 | 121 |
| 15 | 143 |
| 16 | 231 |
| 17 | 221 |
| 18 | 331 |
| 19 | 432 |
| 20 | 231 |

Ranking function (for example, $a2 = 25$, $b2 = 5$, and $c2 = 1$)

| F2 |
|---|
| 116 |
| 67 |
| 38 |
| 96 |
| 69 |
| 111 |
| 71 |
| 58 |
| 66 |
| 42 |
| 38 |
| 47 |
| 113 |
| 36 |
| 48 |
| 66 |
| 61 |
| 91 |
| 117 |
| 66 |

A larger value of F2 indicates a higher priority

| Ranking of F2 | Priorities of the driving scenarios | Numbers of the driving scenarios |
|---|---|---|
| 117 | 1 | 19 |
| 116 | 2 | 1 |
| 113 | 3 | 13 |
| 111 | 4 | 6 |
| 96 | 5 | 4 |
| 91 | 6 | 18 |
| 71 | 7 | 7 |
| 69 | 8 | 5 |
| 67 | 9 | 2 |
| 66 | 10 | 9 |
| 66 | 10 | 16 |
| 66 | 10 | 20 |
| 61 | 11 | 17 |
| 58 | 12 | 8 |
| 48 | 13 | 15 |
| 47 | 14 | 12 |
| 42 | 15 | 10 |
| 38 | 16 | 3 |
| 38 | 16 | 11 |
| 36 | 17 | 14 |

FIG. 5

S601: Obtain preset priorities of a plurality of scenario features

S602: Obtain evaluation information of a driving scenario, where the evaluation information of the driving scenario is used to describe priorities of the plurality of scenario features in the driving scenario

S603: Determine priorities of M driving scenarios based on the preset priorities of the plurality of scenario features and M pieces of evaluation information of the M driving scenarios, where M is an integer greater than 1

S604: Select, based on the priorities of the M driving scenarios, N driving scenarios from the M driving scenarios for testing, where N is a positive integer less than M

S605: Adjust the preset priorities of the plurality of scenario features based on a test result when the test result of the N driving scenarios does not meet a test objective

FIG. 6

Computing device 40

Processor 401

Communication interface 402

Bus 404

Memory 403

Display 405

FIG. 7

## INTERNATIONAL SEARCH REPORT

| International application No. |
|---|
| **PCT/CN2024/106991** |

| | |
|---|---|
| **A.** | **CLASSIFICATION OF SUBJECT MATTER** |

G06F18/241(2023.01)i

According to International Patent Classification (IPC) or to both national classification and IPC

| | |
|---|---|
| **B.** | **FIELDS SEARCHED** |

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNABS: CNTXT; DWPI; SIPOABS; USTXT; CNKI; IEEE: 驾驶, 场景, 测试, 特征, 参数, 指标, 属性, 取值, 等级, 级别, 权重, 系数, 优先级; drive, scenario, test, characteristic, parameter, index, attribute, value, grade, rank, weight, coefficient, priority

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | CN 114544191 A (WENYUAN SUXING (JIANGSU) TECHNOLOGY CO., LTD.) 27 May 2022 (2022-05-27)<br>description, paragraphs 32-42 | 1-18 |
| X | CN 105954040 A (BAIDU ONLINE NETWORK TECHNOLOGY (BEIJING) CO., LTD.) 21 September 2016 (2016-09-21)<br>description, paragraphs 15-45 | 1-18 |
| A | CN 111122175 A (BEIJING BAIDU NETCOM SCIENCE AND TECHNOLOGY CO., LTD.) 08 May 2020 (2020-05-08)<br>entire document | 1-18 |
| A | CN 113109055 A (SAIC MOTOR CORP., LTD.) 13 July 2021 (2021-07-13)<br>entire document | 1-18 |
| A | JP 2022000376 A (APOLLO INTELLIGENT CONNECTIVITY BEIJING TECHNOLOGY CO., LTD.) 04 January 2022 (2022-01-04)<br>entire document | 1-18 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 September 2024** | **25 September 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

| International application No. |
| --- |
| **PCT/CN2024/106991** |

| Patent document cited in search report | | | Publication date (day/month/year) | Patent family member(s) | | | Publication date (day/month/year) |
| --- | --- | --- | --- | --- | --- | --- | --- |
| CN | 114544191 | A | 27 May 2022 | CN | 114544191 | B | 03 May 2024 |
| CN | 105954040 | A | 21 September 2016 | CN | 105954040 | B | 12 February 2019 |
| CN | 111122175 | A | 08 May 2020 | EP | 3846035 | A1 | 07 July 2021 |
| | | | | EP | 3846035 | B1 | 02 November 2022 |
| | | | | KR | 20210087889 | A | 13 July 2021 |
| | | | | KR | 102487336 | B1 | 10 January 2023 |
| | | | | JP | 2021109653 | A | 02 August 2021 |
| | | | | JP | 7301077 | B2 | 30 June 2023 |
| | | | | US | 2021208586 | A1 | 08 July 2021 |
| | | | | US | 11556128 | B2 | 17 January 2023 |
| | | | | CN | 111122175 | B | 25 February 2022 |
| CN | 113109055 | A | 13 July 2021 | None | | | |
| JP | 2022000376 | A | 04 January 2022 | JP | 7292338 | B2 | 16 June 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311035386